# EUROPÄISCHE PATENTANMELDUNG

(11) **EP 4 697 566 A1**
(43) Veröffentlichungstag der Anmeldung: **18.02.2026**
(21) Anmeldenummer: 24194458.6
(22) Anmeldetag: 14.08.2024
(51) Int. Cl.: H02K 3/28, H02K 3/52, H02K 7/14, H02K 9/06, H02K 11/33

(54) **MOBILE WERKZEUGMASCHINE**

(71) Anmelder: Hilti Aktiengesellschaft, 9494 Schaan (LI)
(72) Erfinder: Ruff, Christian, 86391 Stadtbergen (DE); Schwarz, Stefan, 86899 Landsberg (DE); Heigl, Bernd, 86199 Augsburg (DE); Asmus, Torsten, 87600 Kaufbeuren (DE)
(74) Vertreter: Hilti Aktiengesellschaft Corporate Intellectual Property

(57) **Zusammenfassung**

Offenbart wird eine mobile Werkzeugmaschine aufweisend einen Elektromotor und ein Steuergerät, wobei der Elektromotor eine ganzzahligen Anzahl von Statorwicklungen hat, dadurch gekennzeichnet, dass der Elektromotor gleich viele Kontakte wie Statorwicklungen enthält, die abwechselnd in einer Ringschaltung verschaltet sind, wobei jeder Kontakt elektrisch einzeln mit einem diesem Kontakt zugeordneten Anschluss des Steuergeräts verbunden ist, und wobei das Steuergerät dazu eingerichtet ist, je zwei in der Ringschaltung gegenüberliegende Kontakte paarweise gleichphasig mit elektrischem Strom zu beaufschlagen.

## Beschreibung

### GEBIET DER ERFINDUNG

Die vorliegende Erfindung betrifft eine mobile Werkzeugmaschine. Die Werkzeugmaschine hat einen Elektromotor und ein Steuergerät. Der Elektromotor hat eine ganzzahlige Anzahl von Statorwicklungen.

Bei Werkzeugmaschinen der eingangs genannten Art kann durch Beaufschlagen der Statorwicklungen mit elektrischem Strom in bekannter Weise ein rotierendes Magnetfeld erzeugt werden, um ein Drehmoment auf einen Rotor auszuüben, um den Rotor zu rotieren, um ein Werkzeug der Werkzeugmaschine anzutreiben.

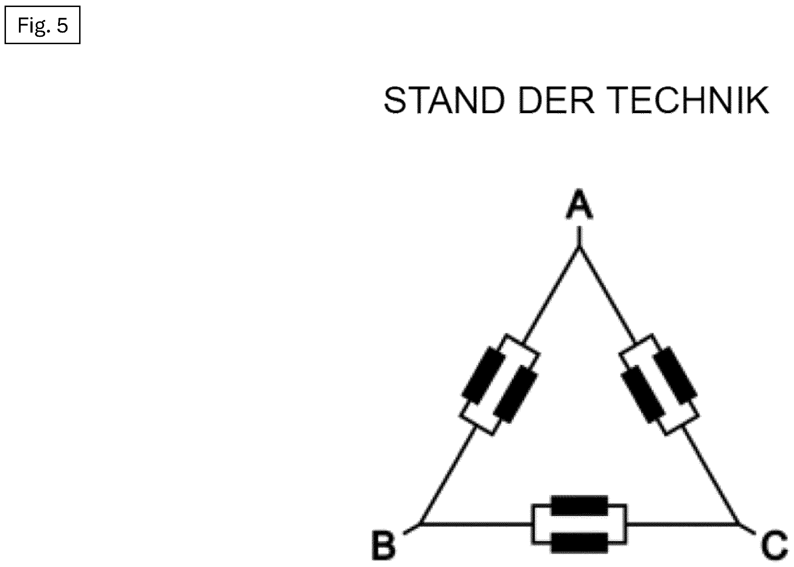

Es gibt hierzu beispielsweise die in Fig. 5 dargestellte Doppel-Dreieckschaltung. Bei dieser Schaltung hat ein Stator drei Kontakte A, B und C. Zwischen je zwei Kontakten sind zwei Statorwicklungen parallel geschaltet. Diese parallel geschalteten Statorwicklungen sind einander im Stator bezüglich einer Rotorachse des Elektromotors gegenüber angeordnet. Es kommt also zu einem Untersetzungsverhältnis von 1:2 (d.h. ins Langsame) zwischen einer Rotation einer elektrischen Phase und einer Rotation eines Rotors um die Rotorachse. Im Umkehrschluss wird ein entsprechend starkes Drehmoment erzielt. Die drei Kontakte sind je mit einem Anschluss des Steuergeräts mittels eines jeweiligen Kabels verbunden.

Wenn man ein abgebbares Drehmoment erhöhen möchte, muss eine Stromstärke erhöht werden, sodass ein Kabelquerschnitt der Kabel vergrößert werden müsste. Es ist aber aus Fertigungsgründen nicht oder nur schwer möglich, noch dickere Kabel als bisher an ein Steuergerät zu löten. Dies hätte bei aktuellen Elektromotoren für mobile Werkzeugmaschinen zur Folge, dass eine andere Art der Verbindung zwischen Kabel und Anschluss gewählt werden muss.

Vor diesem Hintergrund besteht eine Aufgabe der vorliegenden Erfindung darin, eine verbesserte mobile Werkzeugmaschine bereitzustellen.

### OFFENBARUNG DER ERFINDUNG

Demgemäß wird eine mobile Werkzeugmaschine vorgeschlagen. Die vorgeschlagene mobile Werkzeugmaschine hat einen Elektromotor und ein Steuergerät. Der Elektromotor hat eine ganzzahlige Anzahl von Statorwicklungen. Außerdem hat der Elektromotor gleich viele Kontakte wie Statorwicklungen. Die Kontakte und Statorwicklungen sind abwechselnd in einer Ringschaltung verschaltet. Jeder Kontakt ist elektrisch einzeln mit einem Anschluss des Steuergeräts verbunden, welcher jeweilige Anschluss diesem Kontakt zugeordneten ist. Das Steuergerät ist dazu eingerichtet, je zwei in der Ringschaltung gegenüberliegende Kontakte paarweise gleichphasig mit elektrischem Strom zu beaufschlagen.

Eine Statorwicklung ist vorzugsweise durch einen isolierten Draht gebildet, der um einen Statorkern, Statorkernabschnitt oder dergleichen gewunden ist. Beide Enden des Drahts sind elektrische leitend mit jeweils einem Kontakt verbunden. Indem an beiden Enden des Drahts eine unterschiedliche Spannung angelegt wird, wird ein Stromfluss durch die Statorwicklung hervorgerufen, welcher zusammen mit der Wicklung ein Magnetfeld aufbaut. Dass die Wicklungen in eine Ringschaltung verschaltet sind, bedeutet, dass sich die Statorwicklungen und Kontakte abwechseln. Man kann auch sagen, dass die Ringschaltung einen geschlossenen Ring bildet, wobei entlang des Rings auf eine Statorwicklung je ein Kontakt und auf einen Kontakt je eine Statorwicklung folgen.

Die vorgeschlagene Ringschaltung hat also doppelt so viele Kontakte wie die eingangs geschilderte Doppel-Dreieckschaltung. Indem jeder Kontakt einzeln mit einem Anschluss des Steuergeräts verbunden ist, kann eine Leitungsquerschnitt-Fläche von dem Steuergerät zu den Statorwicklungen effektiv verdoppelt werden. Indem die in der Ringschaltung gegenüberliegenden Statorwicklungen paarweise mit Strom beaufschlagbar sind, kann wie eingangs geschildert ein nochmals höheres Drehmoment erzielt werden. Daher ist die vorgeschlagene mobile Werkzeugmaschine gegenüber bisher bekannten mobilen Werkzeugmaschinen verbessert. Der Begriff "in der Ringschaltung gegenüberliegend" ist doppeldeutig: zum einen befinden sich die entsprechenden Kontakte bzw. Statorwicklungen im Schaltplan gegenüber, zum anderen befinden sich die entsprechenden Kontakte bzw. Statorwicklungen räumlich gegenüber zueinander.

Es kann sein, dass das Steuergerät dazu eingerichtet ist, unterschiedliche Kontaktpaare mit unterschiedlichen Phasen zu beaufschlagen. Mit anderen Worten: es kann sein, dass das Steuergerät dazu eingerichtet ist, die Kontakte innerhalb jedes Kontaktpaars mit einer selben elektrischen Phase zu beaufschlagen, während die Kontaktpaare zueinander mit unterschiedlichen Phasen beaufschlagt werden. Somit kann eine Bewegung des Rotors besonders fein vorgegeben werden.

Es kann sein, dass in dem Steuergerät die beiden jeweiligen Anschlüsse, welche jedem Kontaktpaar zugeordnet sind, mit einem Leiter verbunden sind. Dies stellt eine besonders einfache und robuste Möglichkeit dar, um ein Kontaktpaar mit derselben Phase zu beaufschlagen. Beispielsweise können die Anschlüsse an einer Platine gebildet sein, wobei die Leiter als Leiterbahnen in/an der Platine gebildet sind.

Es kann sein, dass in dem Steuergerät jedem Anschluss ein Schaltelement, insbesondere ein Mosfet-Schaltelement, zugeordnet ist und zum Beaufschlagen des jeweiligen Anschlusses mit elektrischem Strom verschaltet ist. Vorzugsweise sind die Anschlüsse unabhängig zueinander mit elektrischem Strom beaufschlagbar. Indem jeder Anschluss durch ein Schaltelement (vorzugsweise unabhängig) beaufschlagbar ist, kann eine Ansteuerung des Elektromotors besonders variable sein. Beispielsweise sind unterschiedliche Drehzahlen realisierbar, und/oder es sind Energiesparmodi umsetzbar.

Es kann sein, dass jeder Kontakt als eine jeweilige Stromschiene ausgeführt ist, welche jeweils ein Ende eines jeweiligen Leiters beider mit diesem Kontakt verschalteter Statorwicklungen kontaktiert. Eine solche Stromschiene kann beispielsweise aus einem Kontaktabschnitt zum Kontaktieren eines Kabels, zwei Leiteranschlussabschnitten zum Kontaktieren jeweils eines Leiters einer Statorwicklung und einem oder zwei Schienenabschnitten zum Verbinden des Kontaktabschnitts mit den Leiteranschlussabschnitten bestehen. In Kombination mit der Ringschaltung ergeben sich somit besonders einfach konstruierte und besonders Bauraumsparsame Stromschienen, welche eine effiziente Verteilung des elektrischen Stroms von einem jeweiligen Kontakt auf die beiden jeweils zugeordneten Statorwicklungen bewirken.

Es kann sein, dass die Anschlüsse auf zumindest zwei räumlich getrennte Anschlussbereiche des Steuergeräts verteilt sind. Dies stellt eine besonders wichtige Option dar, weil eine Verkabelung räumlich günstig bzw. vorteilhaft verteilt werden kann. In einer bevorzugten Ausgestaltung gibt es zwei Anschlussbereiche, wobei jeder Anschlussbereich jeweils genau einen Anschluss für einen Kontakt je Kontaktpaar hat. Somit lassen sich beispielsweise die Kabelwege planen, sodass eine Montage und/oder Wartbarkeit verbessert ist. Somit lassen sich beispielsweise die Kabelwege planen, sodass eine Luftströmung verbessert ist. Weiters lassen sich die Anschlussbereiche verteilen, sodass ein Hitzeeintrag während eines Anlötens der Kabel verteilt ist.

Es kann sein, dass die zumindest zwei Anschlussbereiche an einer dem Stator zugewandten Seite des Steuergeräts vorhanden sind, wobei sich zwischen den beiden Anschlussbereichen ein Kühler des Steuergeräts befindet. Somit kann es sein, dass ein Luftstrom zwischen den Kabeln hindurch über den Kühler geleitet wird.

Es kann sein, dass sich der Kühler in Verlängerung einer Rotorachse des Elektromotors befindet. Dies stellt eine besonders günstige Relativanordnung dar, um einen Kühlluftstrom durch den Elektromotor zum Kühlen des Steuergeräts zu nutzen.

Es kann sein, dass der Elektromotor einen Lüfter hat, welcher sich entlang der Rotorachse des Elektromotors axial zwischen den Statorwicklungen und dem Steuergerät befindet. Durch die räumliche Nähe kann ein besonders starker Luftstrom zum Kühlen des Steuergeräts mit erzeugt werden.

Es kann sein, dass an jedem Anschluss ein Kabel angelötet ist, das zum Verbinden des Anschlusses mit dem jeweiligen Kontakt geeignet bzw. eingerichtet ist.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

### KURZE BESCHREIBUNG DER FIGUREN

- Fig. 1: zeigt schematisch eine mobile Werkzeugmaschine gemäß einer Ausführungsform der Erfindung;
- Fig. 2: zeigt schematisch eine perspektivische Ansicht eines Elektromotors und eines Steuergeräts der mobilen Werkzeugmaschine, welche miteinander verschaltet sind, und zwar gemäß der Ausführungsform der Erfindung;
- Fig. 3: zeigt schematisch und perspektivisch-figürlich eine ausgeführte Ringschaltung, wobei einander abwechselnd sechs Statorwicklungen und sechs Kontakte aufeinander folgen, wobei die Kontakte als Stromschienen ausgeführt sind, und zwar gemäß der Ausführungsform der Erfindung;
- Fig. 4: zeigt schematisch die Ringschaltung der Fig. 3 in Schaltplandarstellung, und zwar gemäß der Ausführungsform der Erfindung; und
- Fig. 5: zeigt schematisch eine Doppel-Dreieckschaltung in Schaltplandarstellung gemäß einem Stand der Technik.

In den Figuren sind gleiche oder funktionsgleiche Elemente mit denselben Bezugszeichen versehen worden, sofern nichts anderes angegeben ist.

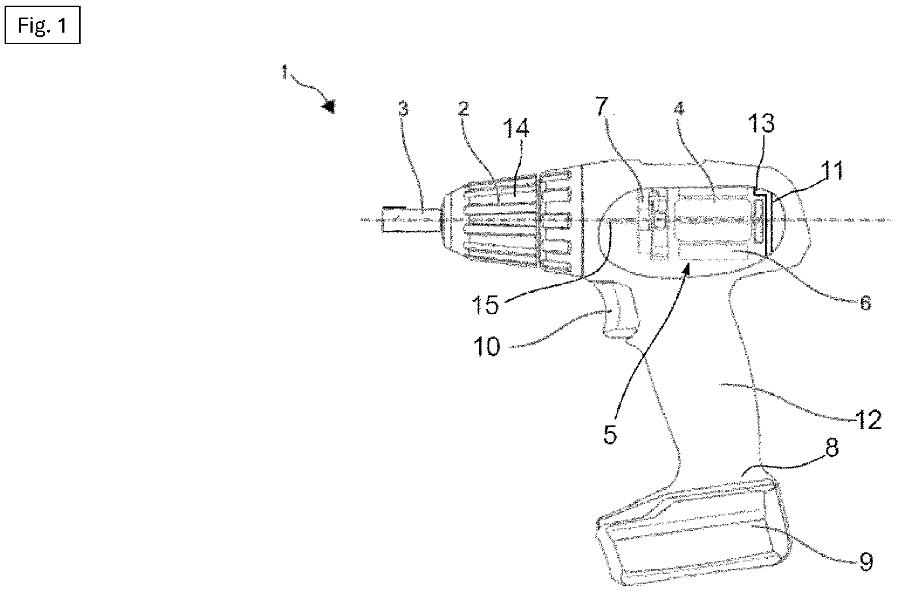

Die Fig. 1 zeigt eine mobile Werkzeugmaschine 1. Die Werkzeugmaschine 1 ist beispielhaft eine Handwerkzeugmaschine, genauer gesagt eine Bohrmaschine. Weitere bevorzugte Ausführungsformen umfassen eine Schleifmaschine oder eine Sägemaschine.

Die Werkzeugmaschine 1 hat eine Werkzeugaufnahme 2 zur Aufnahme eines Werkzeugs 3. Das Werkzeug 3 ist über die Werkzeugaufnahme 2 durch einen Rotor 4 eines Elektromotors 5 rotationsantreibbar.

Der Elektromotor 5 ist beispielsweise ein bürstenloser Wechselstrommotor. Er hat einen Stator 6, der mit einem elektrischen Strom beaufschlagbar ist, um ein Drehmoment zwischen dem Stator 6 und dem Rotor 4 zu erzeugen.

Der Rotor 4 und die Werkzeugaufnahme 2 sind mit einem Untersetzungsgetriebe 7 schaltbar oder nicht schaltbar rotations-gekoppelt.

Die Werkzeugaufnahme 2, der Elektromotor 5, das Untersetzungsgetriebe 7, eine Aufnahme 8 für einen wechselbaren Akkumulator 9, wenigstens ein Betätigungselement 10 und ein Steuergerät 11 sind durch ein Gehäuse 12 gelagert und in der üblichen Weise funktionsverbunden. Das Betätigungselement 10 ist vorzugsweise ein Taster.

Die Werkzeugmaschine 1 ist kabellos betreibbar. Der Akkumulator 9 weist Lithium auf.

Die Werkzeugmaschine 1 ist als tragbares Gerät ausgebildet. Sie weist ein Gewicht zwischen 0,5 und 15 kg und allgemein von weniger als 25 kg auf.

Die Steuervorrichtung enthält beispielsweise einen Hallsensor 13, der zum Erfassen eines Rotationswinkels und einer Winkelgeschwindigkeit des Rotors 4 relativ zu dem Gehäuse 12 ausgelegt und angeordnet ist.

Die Werkzeugaufnahme 2 hat einen radial außen angeordneten Griff 14, der ein Teil der Werkzeugaufnahme 2 ist. Von dem Elektromotor 5 aus gesehen ist dem Untersetzungsgetriebe 7 eine Spindel 15 nachgeschaltet, welche zum rotatorischen Leistung-Übertragen auf die Werkzeugaufnahme 2 geeignet ist.

Durch ein Verdrehen des Griffs 14 gegenüber der Spindel 15 kann ein (nicht dargestelltes) Futter der Werkzeugaufnahme 2 geöffnet und/oder geschlossen werden.

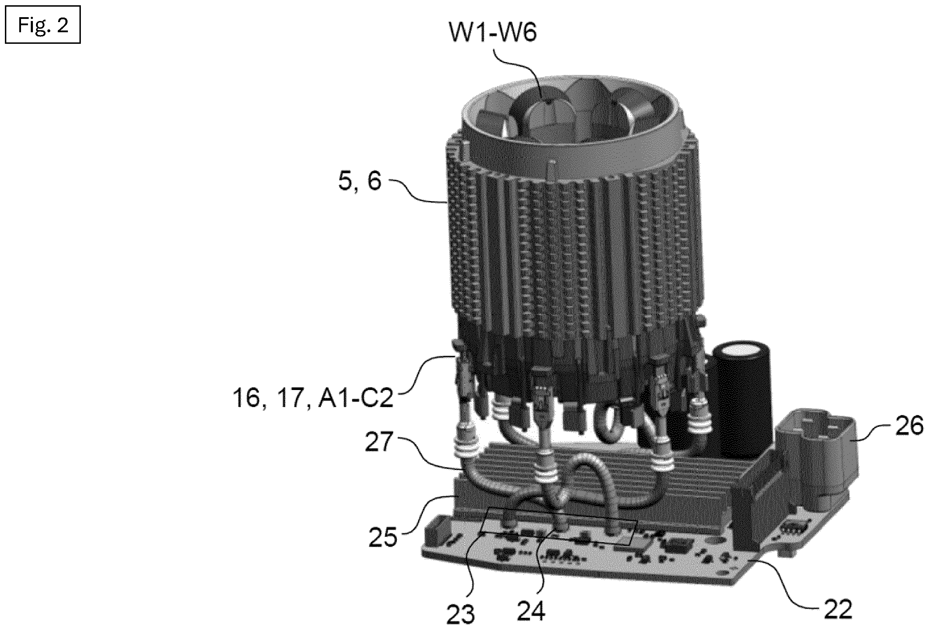

Anhand der Fig. 2 bis 4 wird nun der gemeinsame Aufbau des Elektromotors 5 und des Steuergeräts 11 näher beschrieben.

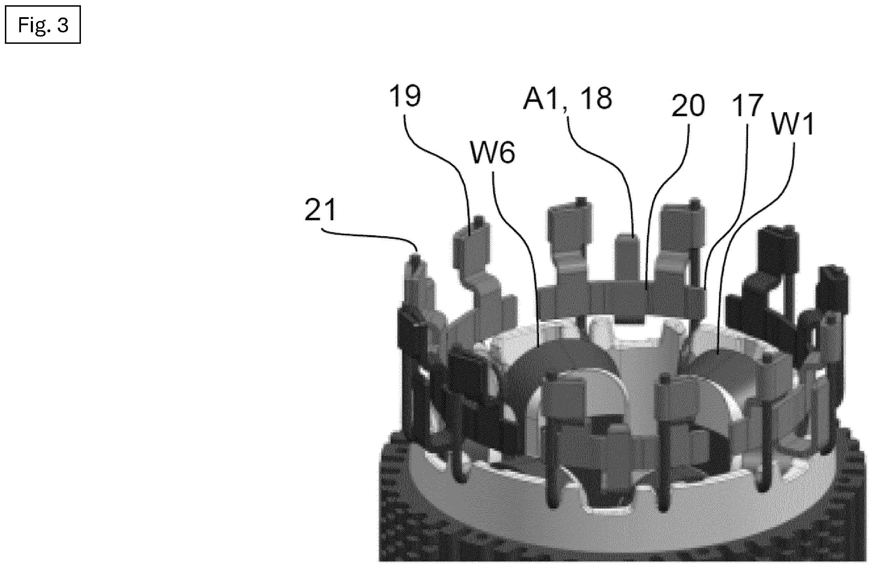

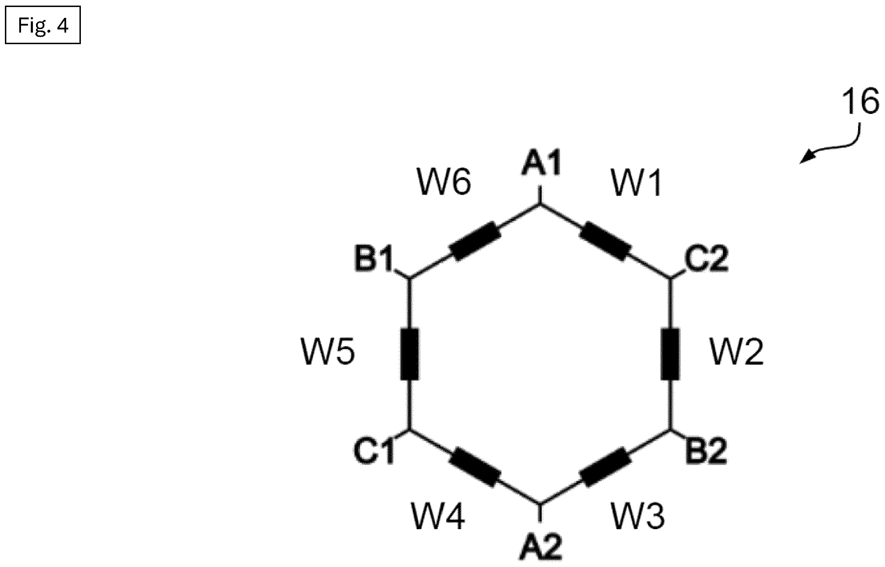

Der Stator 6 hat beispielsweise 6 Statorwicklungen W1-W6. Die Statorwicklungen W1-W6 sind in einer Ringschaltung 16 geschaltet, wobei zwischen je zwei Wicklungen W1-W6 jeweils ein Kontakt A1, A2, B1, B2, C1, C2 angeordnet und geschaltet ist. Man kann die Ringschaltung 16 als eine zu einem Ring geschlossene Reihenschaltung beschreiben. Die Ringschaltung 16 ist in der Fig. 3 figürlich und in der Fig. 4 als Schaltplan gezeigt.

Die Kontakte A1 - C2 sind als Stromschienen 17 ausgeführt. Jede Stromschiene 17 hat einen Kontaktabschnitt 18, zwei Leiteranschlussabschnitte 19 und einen Verbindungsabschnitt 20, welcher die beiden Leiteranschlussabschnitte 19 mit dem Kontaktabschnitt 18 verbindet. Jeder Leiteranschlussabschnitt 19 hält ein Ende 21 eines Leiters, welcher die jeweilige Wicklung W1 - W6 ausbildet.

Wie anhand der Fig. 2 zu erkennen ist, hat das Steuergerät 11 einen Platinenaufbau. Auf einer Platine 22 sind dabei in zwei räumlich beabstandeten Anschlussbereichen 23 jeweils drei Anschlüsse 24 angeordnet und verschaltet. Zwischen den Anschlussbereichen 23 befindet sich ein Kühlkörper 25, welcher mit Mosfet-Schaltelementen thermisch gekoppelt ist. Die Mosfet-Schaltelemente sind verschaltet, um eine Stromstärke und einen Spannungsverlauf an jedem Anschluss 24 individuell steuern und/oder regeln zu können. Der Kühlkörper 25 ist eine bevorzugte Kühler-Bauweise. Auf der Platine 22 sind beispielsweise noch weitere aktive und/oder passive Bauelemente verbaut, wie beispielsweise ein Satz Batteriekontakte 26.

Jeder der Kontakte A1 - C2 ist mit einem zugeordneten Anschluss 24 mittels eines einzelnen Kabels 27 elektrisch verbunden.

Die Mosfet-Schaltelemente der Platine 22 sind dazu eingerichtet, jeden Anschluss 24 mit einem individuell einstellbaren Spannungsverlauf zu beaufschlagen.

In einem ersten Betriebsmodus wird das Kontaktepaar A1, A2 mit einer ersten Phase beaufschlagt, wird das Kontaktepaar B1, B2 mit einer zweiten Phase beaufschlagt, und wird das Kontaktepaar C1, C2 mit einer dritten Phase beaufschlagt. Die Phasen sind um 120° versetzt. Somit wird in dem ersten Betriebsmodus eine langsame Rotation des Rotors 4 mit hohem Drehmoment bewirkt.

In einem zweiten Betriebsmodus wird der Kontakt A1 mit einer ersten Phase, wird der Kontakt B2 mit einer zweiten Phase, und wird der Kontakt C1 mit einer dritten Phase beaufschlagt. Die Phasen sind ebenfalls um 120° versetzt. Somit werden in dem zweiten Betriebsmodus jeweils zwei Statorwicklungen W1 - W6 gemeinsam mit Strom beaufschlagt. Das bewirk eine schnellere Rotation des Rotors 4, wenn auch mit niedrigerem Drehmoment.

In der Fig. 2 werden ein Rotor 4 und damit gekoppelt ein Rotor-fester Lüfter nicht gezeigt. Der Rotor 4 läuft konzentrisch in dem Stator 6. Der Lüfter befindet sich zwischen dem Stator 6 und dem Kühlkörper 25. Somit erzeugt der Lüfter im Betrieb einen Luftstrom zum Kühlen des Kühlkörpers 25 und des Stators 6. Dies verbessert eine Effizienz der gekühlten Teile.

Obwohl die vorliegende Erfindung anhand von Ausführungsbeispielen beschrieben wurde, ist sie vielfältig modifizierbar.

### BEZUGSZEICHENLISTE

- 1: Werkzeugmaschine
- 2: Werkzeugaufnahme
- 3: Werkzeug
- 4: Rotor
- 5: Elektromotor
- 6: Stator
- 7: Untersetzungsgetriebe
- 8: Aufnahme für einen wechselbaren Akkumulator
- 9: Akkumulator
- 10: Betätigungselement
- 11: Steuergerät
- 12: Gehäuse
- 13: Hallsensor
- 14: Griff
- 15: Spindel
- 16: Ringschaltung
- 17: Stromschiene
- 18: Kontaktabschnitt
- 19: Leiteranschlussabschnitt
- 20: Verbindungsabschnitt
- 21: Ende eines Leiters einer Wicklung
- 22: Platine
- 23: Anschlussbereich
- 24: Anschluss
- 25: Kühlkörper
- 26: Batteriekontakt
- 27: Kabel
- A1, A2: Kontakte, Kontaktpaar
- B1, B2: Kontakte, Kontaktpaar
- C1, C2: Kontakte, Kontaktpaar
- W1-W6: Statorwicklung

## Patentansprüche

1. Mobile Werkzeugmaschine (1) aufweisend einen Elektromotor (5) und ein Steuergerät (11), wobei der Elektromotor (5) eine ganzzahligen Anzahl von Statorwicklungen (W1 - W6) hat,
**dadurch gekennzeichnet, dass** der Elektromotor (11) gleich viele Kontakte (A1, A2, B1, B2, C1, C2) wie Statorwicklungen (W1 - W6) enthält, die abwechselnd in einer Ringschaltung (16) verschaltet sind, wobei jeder Kontakt (A1, A2, B1, B2, C1, C2) elektrisch einzeln mit einem diesem Kontakt (A1, A2, B1, B2, C1, C2) zugeordneten Anschluss (24) des Steuergeräts (11) verbunden ist, und wobei das Steuergerät (11) dazu eingerichtet ist, je zwei in der Ringschaltung (16) gegenüberliegende Kontakte (A1, A2; B1, B2; C1, C2) paarweise gleichphasig mit elektrischem Strom zu beaufschlagen.

2. Mobile Werkzeugmaschine nach Anspruch 1,
**dadurch gekennzeichnet, dass** das Steuergerät (11) dazu eingerichtet ist, unterschiedliche Kontaktpaare (A1, A2; B1, B2; C1, C2) mit unterschiedlichen Phasen zu beaufschlagen.

3. Mobile Werkzeugmaschine nach einem der vorhergehenden Ansprüche,
**dadurch gekennzeichnet, dass** in dem Steuergerät (11) die beiden jeweiligen Anschlüsse (24), welche jedem Kontaktpaar (A1, A2; B1, B2; C1, C2) zugeordnet sind, mit einem Leiter verbunden sind.

4. Mobile Werkzeugmaschine nach einem der vorhergehenden Ansprüche,
**dadurch gekennzeichnet, dass** in dem Steuergerät (11) jedem Anschluss ein Schaltelement, insbesondere ein Mosfet-Schaltelement, zugeordnet ist und zum Beaufschlagen des jeweiligen Anschlusses verschaltet ist.

5. Mobile Werkzeugmaschine nach einem der vorhergehenden Ansprüche,
**dadurch gekennzeichnet, dass** jeder Kontakt (A1, A2; B1, B2; C1, C2) als eine jeweilige Stromschiene (17) ausgeführt ist, welche jeweils ein Ende (21) eines jeweiligen Leiters beider mit diesem Kontakt (A1, A2; B1, B2; C1, C2) verschalteter Statorwicklungen (W1 - W6) kontaktiert.

6. Mobile Werkzeugmaschine nach einem der vorhergehenden Ansprüche,
**dadurch gekennzeichnet, dass** die Anschlüsse (24) auf zumindest zwei räumlich getrennte Anschlussbereiche (23) des Steuergeräts (11) verteilt sind.

7. Mobile Werkzeugmaschine nach Anspruch 6,
**dadurch gekennzeichnet, dass** die zumindest zwei Anschlussbereiche (23) an einer dem Stator (6) zugewandten Seite des Steuergeräts (11) vorhanden sind, wobei sich zwischen den beiden Anschlussbereichen (23) ein Kühler (25) des Steuergeräts (11) befindet.

8. Mobile Werkzeugmaschine nach Anspruch 7,
**dadurch gekennzeichnet, dass** sich der Kühler (25) in Verlängerung einer Rotorachse des Elektromotors (5) befindet.

9. Mobile Werkzeugmaschine nach Anspruch 7 oder 8,
**dadurch gekennzeichnet, dass** der Elektromotor (5) einen Lüfter hat, welcher sich entlang der Rotorachse bzw. einer Rotorachse des Elektromotors (5) axial zwischen den Statorwicklungen (W1 - W6) und dem Steuergerät (11) befindet.

10. Mobile Werkzeugmaschine nach einem der vorhergehenden Ansprüche,
**dadurch gekennzeichnet, dass** an jedem Anschluss (24) ein Kabel (27) zum Verbinden des Anschlusses (24) mit dem jeweiligen Kontakt (A1, A2; B1, B2; C1, C2) angelötet ist.
